(19) **Europäisches Patentamt** **European Patent Office** **Office européen des brevets**

(11) **EP 4 002 234 B1**

(12) **EUROPEAN PATENT SPECIFICATION**

(45) Date of publication and mention
of the grant of the patent:
**25.06.2025  Bulletin 2025/26**

(51) International Patent Classification (IPC):
***G06Q 10/00*** *(2023.01)*

(52) Cooperative Patent Classification (CPC):
**G06Q 10/00**

(21) Application number: **21159683.8**

(22) Date of filing: **26.02.2021**

(54) **SYSTEM AND METHOD FOR A REAL-TIME DISTRIBUTED DYNAMIC TASK SCHEDULING**

SYSTEM UND VERFAHREN ZUR ECHTZEIT-VERTEILTEN DYNAMISCHEN AUFGABENPLANUNG

SYSTÈME ET PROCÉDÉ DE PROGRAMMATION DE TÂCHES DYNAMIQUE DISTRIBUÉ EN TEMPS RÉEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2020  IN 202021049766**

(43) Date of publication of application:
**25.05.2022  Bulletin 2022/21**

(73) Proprietor: **Tata Consultancy Services Limited Maharashtra (IN)**

(72) Inventors:
 • **SADHU, Arup Kumar**
   **700160 Kolkata, West Bengal (IN)**
 • **Chakraborty, Debojyoti**
   **700160 Kolkata, West Bengal (IN)**
 • **BERA, Titas**
   **700160 Kolkata, West Bengal (IN)**

(74) Representative: **Goddar, Heinz J.**
   **Boehmert & Boehmert**
   **Anwaltspartnerschaft mbB**
   **Pettenkoferstrasse 22**
   **80336 München (DE)**

(56) References cited:
   **US-A1- 2020 273 346    US-A1- 2020 285 936**

**Description**

CROSS-REFERENCE TO RELATED APPLICATIONS AND PRIORITY

The present application claims priority from Indian patent application No. 202021049766, filed on November 13, 2020.

TECHNICAL FIELD

The disclosure herein generally relates to field of real-time distributed dynamic task scheduling, and, more particularly, to a system and method for a game theory based real-time distributed dynamic task scheduling among a plurality of agents

BACKGROUND

Allocation of multiple tasks to a group of agents, based on the agents' capacity, refers to a process of task scheduling. Task scheduling is one of the fundamental issues in the domain of multi-agent scenario, even with homogeneous agents. Application of task scheduling includes manufacturing, automated transport of goods in warehouse, environmental monitoring and surveillance, earth observation satellites, and so on.

Existing arrangements comprise a centralized and a distributed approach. In the view of single point failure, the distributed approach is more reliable than the centralized one. However, the distributed approach employs an auction-based bid generation technique, which is computationally costly and is not suitable for real time scheduling. In other words, the task scheduling based on game theory offers a solution, which in general leads to a pure strategy Nash equilibrium. However, the existence of pure strategy Nash equilibrium is not guaranteed. Further, there exist heuristic approaches in the existing arrangements for task scheduling but finding an exact heuristic function leading to an optimal solution is not trivial.

Document US 2020273346 A1 discloses methods for dispatching orders to vehicles based on multi-agent reinforcement learning.

SUMMARY

Embodiments of the present disclosure present technological improvements as solutions to one or more of the above-mentioned technical problems recognized by the inventors in conventional systems. For example, in one embodiment, a processor-implemented method for a game theory based real-time distributed dynamic task scheduling among a plurality of agents is provided.

The processor-implemented method comprising receiving a plurality of predefined attributes of each task, and a plurality of predefined attributes of each agent. Herein, a plurality of agents is given an identification so that each of the plurality of agents is uniquely identified. A set of tasks are self-allocated among the plurality of agents satisfying one or more constraints. One or more strategies are determined based on task self-allocation among the plurality of agents. The predefined constraints include capability of each of the plurality of agents to complete the self-allocated task within a predefined execution time, and minimization of penalty of each task strategy. Each determined strategy is a union of self-allocated set of tasks of all agents.

Further, a reward of each agents' every strategy following the principle of multi-agent markov decision process (MMDP) and a consensus is determined among the plurality of agents based on a pure strategy correlated equilibrium (PSCE), the determined one or more strategies and the computed reward for each of the one or more strategies. The set of tasks are scheduled among the plurality of agents based on the determined consensus. Herein, the scheduling of the set of tasks among the plurality of agents in a distributed fashion.

In another aspect, a system is configured for a game theory based real-time distributed dynamic task scheduling among a plurality of agents is provided. Herein, the system includes an input/output interface, at least one memory storing a plurality of instructions, and one or more hardware processors communicatively coupled with the at least one memory, wherein the one or more hardware processors are configured to execute programmed instructions stored in the at least one memory. Further, a plurality of agents is given an identification so that each of the plurality of agents is uniquely identified. A set of tasks are self-allocated among the plurality of agents satisfying one or more constraints. One or more strategies are determined based on task self-allocation among the plurality of agents. The predefined constraints include capability of each of the plurality of agents to complete the self-allocated task within a predefined execution time, and minimization of penalty of each task strategy. Each determined strategy is a union of self-allocated set of tasks.

Further, a reward of each agents' every strategy following the principle of multi-agent markov decision process (MMDP) and a consensus is determined among the plurality of agents based on a pure strategy correlated equilibrium (PSCE), the determined one or more strategies and the computed reward for each of the one or more strategies. The set of tasks are scheduled among the plurality of agents based on the determined consensus. Herein, the scheduling of the set of tasks among the plurality of agents in a distributed fashion.

In yet another aspect, a non-transitory computer readable medium for a game theory based real-time distributed dynamic task scheduling among a plurality of agents is provided. The non-transitory computer readable medium storing one or more instructions which when executed by a processor on a system cause the processor to perform method is provided. The method comprising receiving a plurality of predefined attributes of each task, and a plurality of predefined attributes of each agent. Herein, a plurality of agents is given an identification so that each of the plurality of agents is uniquely identified. A set of tasks are self-allocated among the plurality of agents satisfying one or more constraints. One or more strategies are determined based on task self-allocation among the plurality of agents. The predefined constraints include capability of each of the plurality of agents to complete the self-allocated task within a predefined execution time, and minimization of penalty of each task strategy. Each determined strategy is a union of self-allocated set of tasks of all agents.

Further, a reward of each agents' every strategy following the principle of multi-agent markov decision process (MMDP) and a consensus is determined among the plurality of agents based on a pure strategy correlated equilibrium (PSCE), the determined one or more strategies and the computed reward for each of the one or more strategies. The set of tasks are scheduled among the plurality of agents based on the determined consensus. Herein, the scheduling of the set of tasks among the plurality of agents in a distributed fashion.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for scheduling a set of tasks among a plurality of agents, according to some embodiments of the present disclosure.

FIG. 2 illustrates a block diagram of the system for scheduling a set of tasks among a plurality of agents, according to an embodiment of the present disclosure.

FIG. 3 illustrates a functional block diagram for a consensus formation among the plurality of agents according to an embodiment of the present disclosure.

FIG. 4 illustrates a functional flow diagram to show the optimal strategy, according to an embodiment of the present disclosure.

FIG. 5(a) & 5(b) is a schematic diagram to show new task and new destination between current position and next destination, according to an embodiment of the present disclosure.

FIG. 6 is a flow chart to illustrate a process for scheduling a set of tasks among a plurality of agents, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the appended claims.

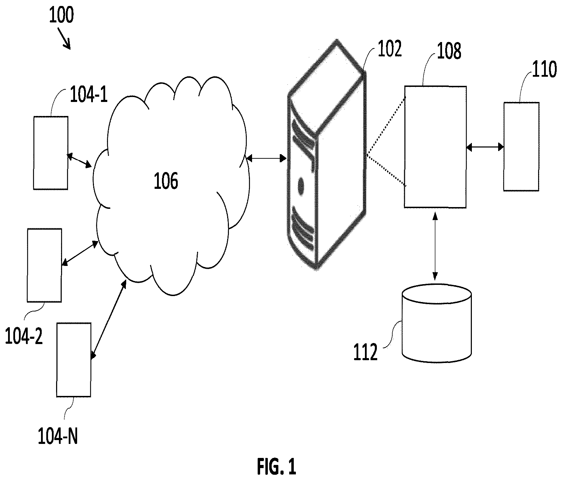

Referring now to the drawings, and more particularly to FIG. 1 through FIG. 6, where similar reference characters denote corresponding features consistently throughout the figures, there are shown preferred embodiments and these embodiments are described in the context of the following exemplary system and/or method.

FIG. 1 illustrates a block diagram of a system 100 for a game theory based real-time distributed dynamic task scheduling among a plurality of agents, in accordance with an example embodiment. Although the present disclosure is explained considering that the system 100 is implemented on a server, it may be understood that the system 100 may comprises one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 are communicatively coupled to the access control system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

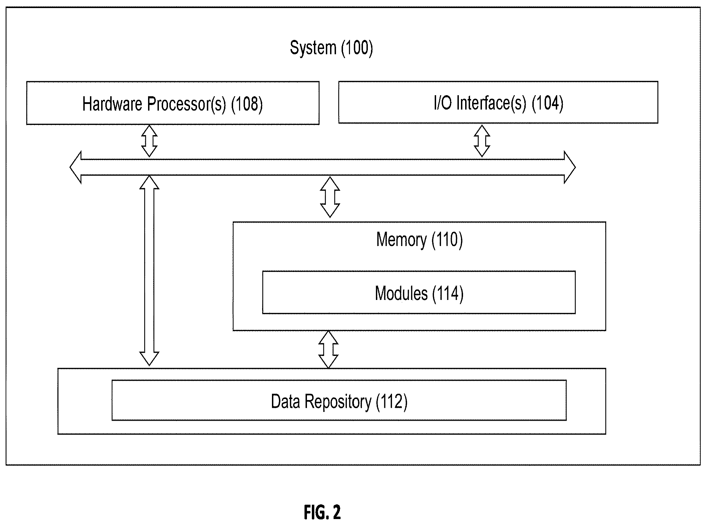

The system 100 may be implemented in a workstation, a server, and a network server. In an embodiment, the computing device 102 further comprises one or more hardware processors 108, one or more memory 110, hereinafter referred as a memory 110 and a data repository 112, for example, a repository 112. The memory 110 is in communication with the one or more hardware processors 108, wherein the one or more hardware processors 108 are configured to execute programmed instructions stored in the memory 110, to perform various functions as explained in the later part of the disclosure. The repository 112 may store data processed, received, and generated by the access control system 100 as shown in FIG. 2.

The access control system 100 supports various connectivity options such as BLUETOOTH®, USB, ZigBee and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. The components and functionalities of the system 100 are described further in detail.

Referring FIG. 2, wherein the system (100) provides a game-theoretic real-time distributed dynamic scheduler, wherein the plurality of agents distributively self-allocate tasks following a particular sequence satisfying agent capacity and task deadline. In another aspect, to realize scalability of the scheduler, the system (100) distributes the plurality of agents into one or more groups containing a predefined number of agents. It is to be noted that along with the distributed dynamic scheduling, group is priority is determined by employing the plurality of agents rewards at consensus. This makes the scheduler robust in terms of average run-time and average reward attained at consensus. Further analysis provides that the scheduler with heuristic formulation guarantees optimal solution and a complexity analysis conveys that the time-complexity for each strategy formation is independent of agent count but depends on the task count along with agent's capacity. While the computation burden for the consensus formation by employing pure strategy correlated equilibrium (PSCE) depends on the number of agents and is independent of task count, which varies linearly with the plurality of agents. Simulation result confirms that the scheduler outperforms the relevant reference scheduler to attain consensus in terms of average run-time and average reward attained at consensus.

In the preferred embodiment of the disclosure, an input/output interface 104 is configured to receive a plurality of predefined attributes of each of the set of tasks, and a plurality of predefined attributes of each of the plurality of agents. Each of the plurality of agents self-allocate the set of tasks dynamically in a distributed fashion, following an ordered sequence of agent indexes. Herein, the motivation of following the ordered sequence of agent indexes is allowing each of the plurality of agents to select its best strategy once by exploiting the greedy characteristic of each of the plurality of agents. Further, at least one preferred agent (based on the ordered sequence) self-allocates the set of tasks among the plurality of agents based on the minimum equidistant norm between one or more attributes of each task and one or more attributes of each agent. Herein, the one or more attributes of each task and the one or more attributes of each agent refer to collection of corresponding position vector, execution time, deadline, capacity and so on.

**In** the preferred embodiment, the system is configured to determine one or more strategies based on the allocated set of tasks among the plurality of agents. It is to be noted that the onetime self-allocation of the set of tasks following the ordered sequence results in a strategy, which is the collection of the set of tasks self-allocated to each of the plurality of agents. It is apparent that multiple sequences containing unlike agent indexes are required to determine multiple strategies. With the aim of creating multiple unique strategies, agent indexes are ordered by employing the permutation of agent indexes. It would be appreciated that each strategy is considered as a union of self-allocated tasks among the plurality of agents. Let $t_i = \{t_j^i\}_{j=1}^{|t_i|}$ be the set of self-allocated tasks by each agent $i$, and $j$ be the task number with a maximum value of $|t_i|$. Let $i \in [\mathbf{1}, m]$ be an index for $i^{th}$ agent and permutation of $m$ agents indexes creates one sequence denoted by S. Therefore,

$$\{t_j^i\} \leftarrow \{t_j^i\} \cup t_{i, i \in S, S \subset \{S\}}^{argmin_j(\|q_i - q_t^j\| + \|q_t^j - h_f^j\|)} | (C_i^1, C_i^2), \forall_i \qquad (1)$$

Wherein, $q_i$ denotes position vector of the agent $i$, $q_t^j$ refers to the position vector of the $j^{th}$ task dependency, $h_f^j$ be the position vector of the final destination of the $j^{th}$ task. The $argmin_j(||q_i - q_t^j|| + ||q_t^j - h_f^j||)$ computes the required L2 form, and the j* task index for which the computed equidistant is minimum. Further, $C_i^1$, and $C_i^2$ are constraints to explain agent capacity, task deadline etc. need to be satisfied by the agent $i$ during strategy formation.

In the preferred embodiment, the system is configured to self-allocate the received set of tasks among the plurality of agents based on predefined constraints. Herein, the predefined constraints include capability of each of the plurality of agents to complete the allocated task within a predefined execution time, and minimization of penalty of each strategy. Each strategy offered by a sequence needs to satisfy one or more predefined constraints. For example, a first constraint is regarding the agent's task completion capability and task execution time and a second constraint deals with the penalty minimization because of unscheduled tasks within stipulated execution time. As mentioned in equation (2), constraints $C_i^1$ imposes upon the agent $i$ to keep a limit while self-allocating tasks. Therefore, constraint $C_i^1$ for agent $i$ is:

$$C_i^1 = \sum_{j=1}^{|t_i|\leq|T|} L_j \leq L_i \qquad (2)$$

wherein, $L_i$ be the maximum task completion capacity of $i$ and, $L_j$ be the agent capacity required to complete the $j^{th}$ task $t_j^i$ to be assigned to $i$.

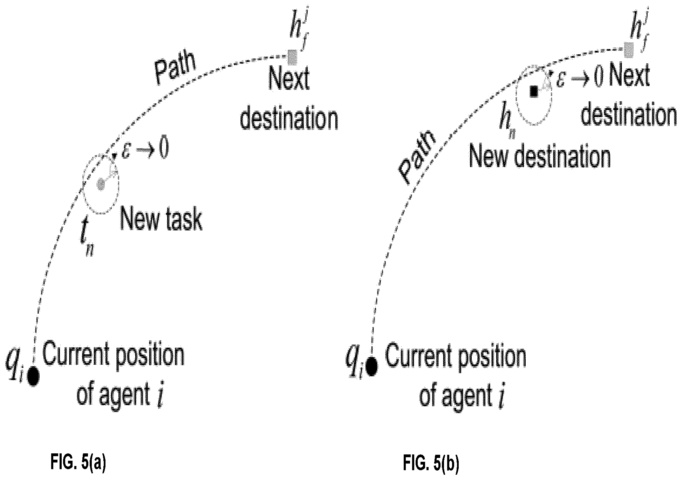

While self-allocating the set of tasks among the plurality of agents, each time agents need to check whether allocation of the new task is executable within the task execution time or not. This checking is done by $C_i^2$. Besides the above-mentioned self-allocation of the set of tasks, $C_i^2$ satisfaction is required at two particular situations as shown in FIG. 5(a) & 5(b). Herein, the dotted line is the path obtained by employing to reach the gray rectangle (next destination) indicated by $h_f^i$. The ε is a user defined threshold indicated by a dotted circle.

**In** the preferred embodiment, the system is configured to compute a reward for each of the one or more strategies based on principle of multi-agent markov decision process (MMDP). Herein, a heuristic reward function is employed to satisfy the one or more predefined constraints. Based on computation of reward for each of the one or more strategies, the plurality of agents reach consensus based on a pure strategy correlated equilibrium (PSCE), and the determined one or more strategies. The computed reward is received by each agent along with a transition probability from the environment as a feedback. These phenomena are independent of any past event and hence follows a Markov Decision Process (MDP). Herein, in a multi-agent arrangement, each of the plurality of agents is influenced by the remaining agents and to adapt behavior of each agent, the MDP process is extended to a Multi-agent Markov Decision Process (MMDP).

It is apparent that in a cooperative arrangement, the plurality of agents having rational characteristic within the framework of MMDP naturally maximize its own reward as well as for the team. To achieve a balanced situation in terms of earned rewards among the agents, herein, a Pure Strategy Correlated Equilibrium (PSCE) is employed. The PSCE $a*$ refers to the plurality ($m$) of agents' collective actions as follows:

$$a* = \underset{\forall \alpha}{argmax}[\Omega[r_i(a)]], a \in A \qquad (3)$$

wherein, depending on the type of PSCE, $\Omega$ can take $min_{\forall i}$, $max_{\forall i}$, $\sum_{\forall i}$ and $\Pi_{\forall i}$ respectively for Pure Strategy Egalitarian Equilibrium (PSEE), and Pure Strategy Utilitarian Equilibrium (PSUE). The reward of agent i because of collective action $a \in A$ is denoted by $r_i(a)$.

In the preferred embodiment, the system 100 is configured to determine a consensus among the plurality of agents based on a pure strategy correlated equilibrium (PSCE), the determined one or more strategies and computed reward for each of the one or more strategies.

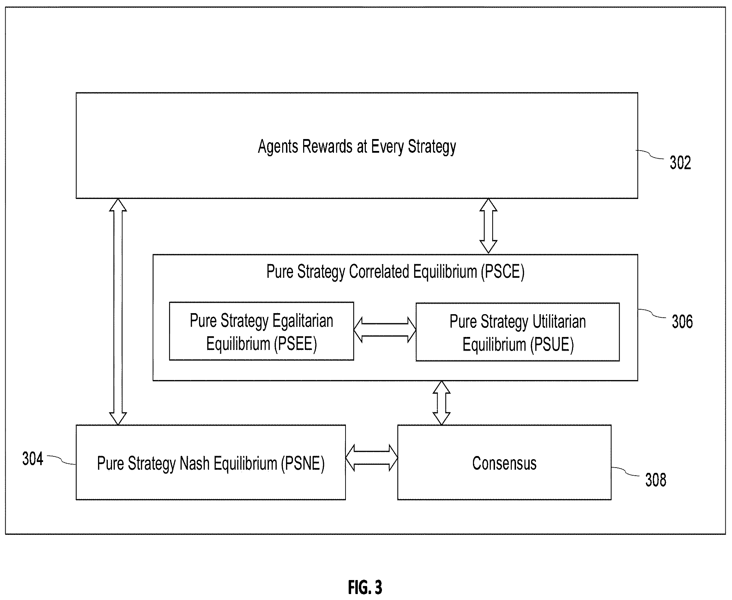

Referring FIG. 3, a flow diagram to illustrate a consensus formation among the plurality of agents, that can be formed in two ways. It comprises attempts to identify 304 the PSNE from the one or more strategies and further computing 306 the two types of PSCE. The first one is the PSEE, while maximizes the reward of least efficient agent of the plurality of agents and ensures optimum resource utilization. Herein, the PSEE and PSUE are jointly satisfied and is defined as consensus 308 for task scheduling.

In the preferred embodiment of the disclosure, the system (100) is configured to make the scheduler scalable for larger number of agents. Herein, the plurality of agents is distributed into a plurality of groups based on the mutual minimum L2 Norm. Each of the plurality of groups forms a consensus among the plurality of agents. In each group, there will be at least one agent, which is connected to at least one agent of at least one group to maintain MMDP assumption. One such agent is declared as a leader of each corresponding group. The leader of each group broadcasts summation of the plurality of agents' rewards at consensus of corresponding the plurality of groups. Herein, the basis of summed reward is borrowed from the concept of utilitarianism. Simultaneously, group priority queue is determined by employing the plurality of agents rewards at consensus. Herein, the preference is based on performance of each of the plurality of groups, which indeed improve efficiency of the system 100.

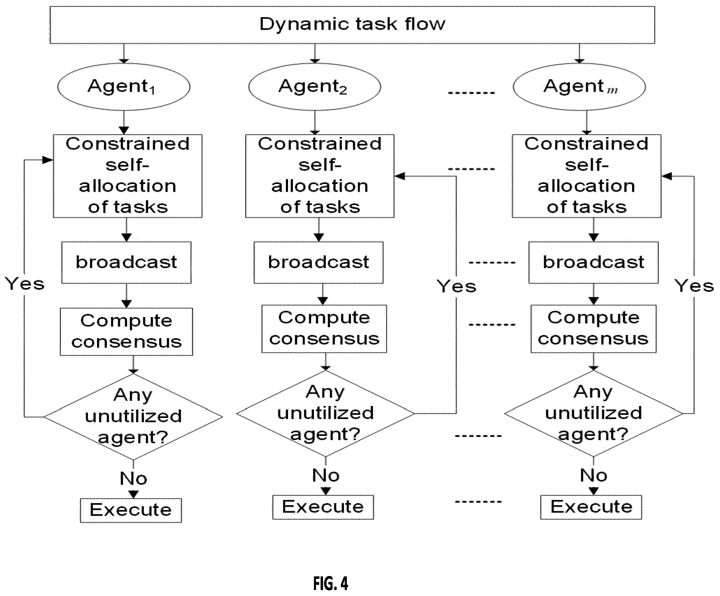

Referring FIG. 4, a functional flow diagram to show the optimal strategy that is identified by evaluating an equilibrium, which is a general agreement or consensus or a balanced situation among the plurality of agents in terms of rewards earned by each agent. It is a situation from which no agent deviates selfishly. Because at equilibrium all agents attain their highest reward. If any one agent deviates selfishly, then the agent's reward as well as the team's reward are reduced. Indeed, the equilibrium's corresponding strategy is the optimal one. Hence, a correlated equilibrium is used, which is a more general solution concept in the domain of game theory, than the same by Nash equilibrium.

Moreover, that the plurality of agents herein self-allocates the one or more tasks based on a Euclidean distance between agent and task, task allocation capacity, task deadline, task completion time, the union of the plurality of agents' self-allocated tasks results in one strategy. Now for each strategy, a heuristic numerical measure is defined based on the Euclidean distance and time parameters. Herein, the numeric measure is the cost of strategy, which needs to be minimized to obtain an optimal strategy. To attain the optimal strategy a merit of game theory is employed, wherein one numerical value is maximized corresponding to each strategy. Hence, the heuristic reward function is defined as the reciprocal of the heuristic cost function.

In one aspect, for distributed dynamic scheduling of multi-agents, the simulation procedure is of two-fold. First fold is regarding the average run-time evaluation and the second fold deals with the procedure of average reward earning by each agent. For average run-time evaluation, let $t_\alpha^l$ be the run-time required to schedule all the tasks by $m$ agents forming a series of consensus denoted by $s_\alpha$ in $l^{th}$ run, where $\alpha \in \{ee, ue, ne, ee + ue\}$. Hence, the average run-time required to schedule all tasks by forming a series of $s_\alpha$ among $m$ agents as follow-

$$t_\alpha^{av} = \frac{1}{l_{max}} \Big[ \sum\nolimits_{l=1}^{l_{max}} t_\alpha^l \Big] \qquad (4)$$

Wherein $t_\alpha^{av}$ denotes the average run-time required to schedule all tasks by forming a series of $s_\alpha$ and $l$ denotes the $l^{th}$ run, whose maximum value is $l_{max}$. Further, it includes the per iteration average run-time to form $s_\alpha$ denoted by $t_{(\alpha,p)}^{av}$ and expressed by -

$$t_{(\alpha,p)}^{av} = \frac{t_\alpha^{av}}{l_\alpha^{av}} \qquad (5)$$

Wherein, $l_\alpha^{av}$ be the average of total number of iterations to schedule all tasks by $m$ agents following $\alpha \in \{ee, ue, ne, ee + ue\}$. The iteration count is notated by employing a counter.

Further, the second fold is for the average reward computation. Let $r_i^l(s_\alpha)$ be the reward earned by an agent $i \in [1, m]$ in the $i^{th}$ run following the strategy $s_\alpha$ Average reward is computed by -

$$r_\alpha^{av} = \frac{1}{m \times l_{max}} \Big[ \sum\nolimits_{l=1}^{l_{max}} \sum\nolimits_{i=1}^{m} r_i^l(s_\alpha) \Big] \qquad (6)$$

Wherein, $r_\alpha^{av}$ be the average reward earned by $m$ agents to form $s_\alpha$. Herein, the output offered by above equations are evaluated for $m$ agents fixing $m_{max}$ to a constant value. However, same can be done by varying the $m_{max}$. Each simulation is conducted for ten times to obtain average values, i.e., $l_{max} = 10$.

Referring FIG. 5(a) & 5(b), a schematic diagram, wherein $q_t^n$ in the FIG. 5(a) refers to a current position of a new task $t_n$. On the other hand, in the FIG. 5(b), $q_t^n$ denotes the current position of a new destination $h_n$. In case, a set of consensus is formed, then the consensus which appears first $s_c(1) \in \{s_c\}$ is executed in a distributed dynamic scheduling algorithm to maintain synchronization among the plurality of agents. Further, to make the scheduler scalable, the agents are distributed into a number of small groups based on the mutual minimum L2 norm. Number of agents in group is denoted by $m_w < m_{max}$, $w \in [1, G]$, where $m_{max}$ be the maximum number of agents a group can have:

$$G = \frac{m}{m_{max}} + 1, \text{ if remainder of } \frac{m}{m_{max}} \neq 0, \quad\quad (7)$$

$$G = \frac{m}{m_{max}}, \text{ if remainder of } \frac{m}{m_{max}} = 0.$$

wherein, $m_{max}$ is the maximum agents a group can have.

Each group form consensus among $m_w$, number of agents. In each group, there will be at least one agent, which is connected (via an ad hoc network) at least one agent of each group to maintain MMDP assumption. One such agent is declared a leader of corresponding group. The leader broadcasts summation of all agents' rewards at consensus of corresponding group. Simultaneously, leader of each group receives summed reward at consensus from remaining groups. The basis of summed reward is borrowed from the concept of utilitarianism. Subsequently, a best group is identified by obtaining group priority queue among groups following with $\Omega = \sum_{i=1}^{m_w}$. Herein, the groups act based on the formed group priority queue. The motive of forming group priority queue is preferring the best performing group, which indeed improve the system efficiency.

It is apparent that the group scheduling is done following consensus and, the group priority queue is formed based on the rewards at consensus. Hence the group scheduling is optimal. Therefore, the formulated heuristic reward function enjoys the merit of game theory and guarantees optimality.

In another embodiment, wherein time-complexity analysis for strategy formation and corresponding reward computation is elaborated. The strategy formation is initiated from self-allocating one task by an agent $i$ which requires ($|T|$ - 1) number of comparisons to identify the suitable task. Time-complexity to self-allocate $t_i$ number of tasks is $|t_i|(|T|$ - 1). A strategy is the collection of $t_i$, $\forall_i$, $i \in [1, m,]$. Hence, the time-complexity for one unconstrained strategy ($s_k =, < t_i > m_w$) formulation by an agent $i$ is $|t_i|(|T|$ - 1), $i.e. O(|t_i|.|T|)$. It is apparent that the time-complexity for strategy formation and corresponding reward computation is independent of agent count. However, it depends on the agent capacity $L_i$ because $t_i$ is the function of $L_i$. Therefore, the computational burden for strategy formation and corresponding reward computation is common for consensus formation either by PSNE or by PSCE.

Further, the time-complexity to compute PSNE and PSCE respectively vary exponentially and linearly with the variation of total number of agents and the time-complexity for consensus formation either follows PSNE or PSCE and independent of task count. However, to make the scheduler computationally more tractable for higher value of $m$ ($m \geq 6$) group scheduling is done. After group scheduling respectively the time-complexity to form consensus in a group by employing the PSCE and PSNE are $O(|S|^m$ and $O(|S|)^{m_w}$ where $|S| = m_w!$ be the number of strategies and $m_w \leq m_{max}$ be the total number of agents in $w^{th}$ group. Hence, time-complexity in the PSNE and PSCE respectively vary exponentially and linearly with the variation of agent number $m_w$. Naturally, time-complexity for consensus formation by employing PSCE is $O$ ($|S|)^{m_w}$ with $|S| = m_w! << O(|S|^m)$ with $|S| = m_w!$ Similarly, time-complexity for consensus formation by employing PSNE is $O$ ($|S|)^{m_w}$ with $|S| = m_w! << O(|S|^{m_w})$ with $|S| = m_w!$. It is also apparent that time-complexity for consensus formation is independent of task count. Hence, it can be inferred here that obtaining consensus by employing PSCE is superior than the same by employing PSNE in terms of time-complexity.

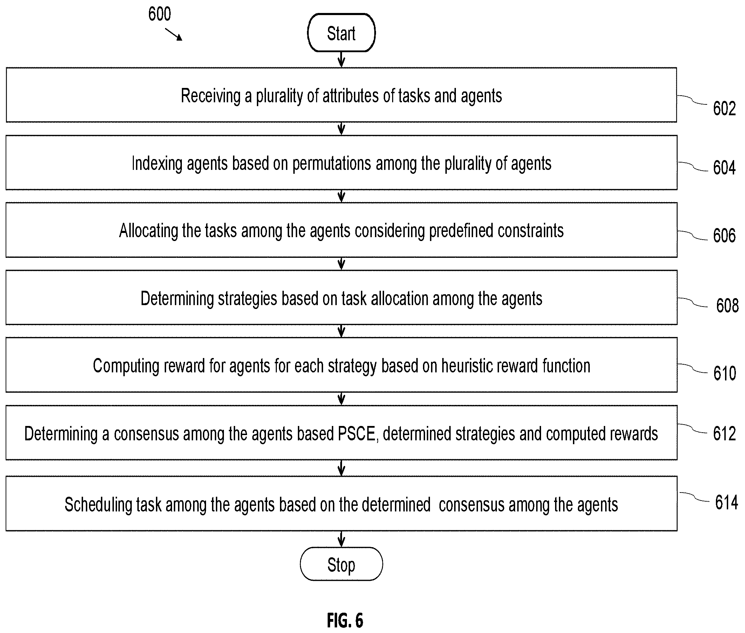

Referring FIG. 6, a flow chart to illustrate a processor-implemented method (600) for a game theory based real-time distributed dynamic task scheduling among a plurality of agents. The method comprises one or more steps as follows.

Initially, at the step (602), receiving a plurality of predefined attributes of each task, and a plurality of predefined attributes of each agent. Each of the plurality of agents self-allocate the set of tasks dynamically in a distributed fashion, following an ordered sequence of agent indexes. Herein, the motivation of following the ordered sequence of agent indexes is allowing each of the plurality of agents to select its best strategy once by exploiting the greedy characteristic of each of the plurality of agents. Further, each of the plurality of agents is given an identification for an ordering to allow each agent in selecting its best strategy by exploiting a greedy characteristic of the agent.

In the preferred embodiment of the disclosure, at the next step (604), self-allocating the received set of tasks among the plurality of agents based on predefined constraints. Herein, the predefined constraints include capability of each of the plurality of agents to complete the self-allocated task within a predefined execution time, and minimization of penalty of each task strategy. The preferred agent (based on the ordered sequence) self-allocates tasks among multiple based on the minimum L2 Norm between agent position vector and task related position vectors. One-time self-allocation of tasks by all agents following the said ordered sequence results in one strategy, which is the collection of all agents self-allocated tasks. It is apparent that multiple sequences containing unlike unique agent identification indexes are required to obtain multiple strategies.

In the preferred embodiment of the disclosure, at the next step (606), determining one or more strategies based on the self-allocated set of tasks among the plurality of agents, wherein each strategy is a union of the plurality of agents self-allocated tasks.

**In** the preferred embodiment of the disclosure, at the next step (608), computing a reward for each of the one or more strategies with assumption of multi-agent markov decision process (MMDP). The PSCE includes a Pure Strategy Egalitarian Equilibrium (PSEE) and a Pure Strategy Utilitarian Equilibrium (PSUE). It is to be noted that the Pure Strategy Egalitarian Equilibrium (PSEE) is selected to maximize reward of least efficient agent's reward in the one or more groups and the Pure Strategy Utilitarian Equilibrium (PSUE) is selected to maximize the sum of all agents' rewards, which indeed maximize the resource utilization in the one or more groups.

In the preferred embodiment of the disclosure, at the next step (610), determining a consensus among the plurality of agents based on a pure strategy correlated equilibrium (PSCE) employing rewards of the plurality of agents.

In the preferred embodiment of the disclosure, at the last step (612), scheduling the set of tasks among the plurality of agents based on the determined consensus, wherein the scheduling of the set of tasks among the plurality of agents in a distributed fashion.

In another aspect of the disclosure, the processor-implemented method comprising one or more steps for scalable scheduling the larger number of agents. Herein, the method comprising creating one or more groups from the plurality of agents based on a predefined mutual equidistant principle and determining one or more strategies within each of the one or more groups based on task self-allocation among the agents of each group. Further, the method includes computing a reward for each of the one or more strategies of each of the one or more groups with the assumption of MMDP. and determining a consensus among the agents of each group based on the PSCE. Further, wherein a group lead is identified randomly consensus, determining a group priority queue based on each group reward at consensus, and scheduling the set of tasks among the plurality of agents based on the identified group lead and determined a group priority queue.

The embodiments of present disclosure herein address unresolved problem of auction-based bid generation technique in a distributed dynamic task scheduling among the plurality of agents. The auction-based bid generation technique is a NP-hard problem and is not suitable for real-time task scheduling among the plurality of agents. The embodiments thus provide a distributed dynamic scheduler, wherein the plurality of agents self-allocate tasks among themselves dynamically in a distributed fashion, following an ordered sequence of agent indexes. The motivation of following the ordered sequence of agent indexes is allowing each agent to select its best strategy once by exploiting the greedy characteristic of the agent. The preferred agent (based on the ordered sequence) self-allocates tasks among multiple based on the minimum L2 Norm between task attributes and agent attributes. Here, task and agent attributes refer to the collection of corresponding position vector, execution time, deadline, capacity, and so on. One-time self-allocation of tasks following the said ordered sequence results in a strategy, which is the collection of all agents self-allocated tasks. The strategy offered by a sequence needs to satisfy predefined constraints. Moreover, satisfying predefined constraints a heuristic reward function for each strategy is proposed. Based on these rewards, agents reach consensus by playing an exact potential game.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include each hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) according to the appended claims. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a scope being indicated by the following claims.

## Claims

1. A processor-implemented method (600) for a game theory based real-time distributed dynamic task scheduling among a plurality of agents comprising:

   receiving (602), via one or more hardware processors, a plurality of predefined attributes of each of the set of tasks, and a plurality of predefined attributes of each of the plurality of agents;

   self-allocating (604), via one or more hardware processors, the received set of tasks among the plurality of agents satisfying predefined constraints, dynamically in a distributed fashion, following an ordered sequence of agent indexes, wherein the predefined constraints include capability of each of the plurality of agents to complete the self-allocated task within a predefined execution time, and minimization of penalty of each strategy, wherein based on the ordered sequence, at least one preferred agent, self-allocates the set of tasks among the plurality of agents based on a minimum equidistant norm between one or more attributes of each task and one or more attributes of each agent;

   determining (606), via one or more hardware processors, one or more strategies based on the self-allocation of the set of tasks among the plurality of agents, wherein each strategy is a union of self-allocated set of tasks of each agent;

   computing (608), via one or more hardware processors, a reward for each strategy of each of the plurality of agents with an assumption of a multi-agent markov decision process (MMDP);

   determining (610), via one or more hardware processors, a consensus among the plurality of agents based on a pure strategy correlated equilibrium (PSCE) employing rewards of the plurality of agents;

   scheduling (612), via one or more hardware processors, the set of self-allocated tasks among the plurality of agents in the real-time based on the determined consensus, wherein the real-time scheduling of the set of tasks among the plurality of agents is performed in a distributed fashion;

   creating, via one or more hardware processors, one or more groups from the plurality of agents based on a predefined mutual equidistant principle;

   determining, via the one or more hardware processors, one or more strategies within each of the one or more groups based on task allocation among the agents of each group;

   computing, via the one or more hardware processors, a reward function of each of the one or more determined strategies of each of the plurality of agents with MMDP assumption;

   determining, via the one or more hardware processors, a consensus among the agents of each group based on the PSCE, wherein a group lead is identified randomly;

   determining, via the one or more hardware processors, a group priority queue based on the determined consensus among the agents of each group; and

   scheduling, via the one or more hardware processors, the set of tasks among the plurality of agents based on the identified group lead and tasks are executed following the determined priority queue.

2. The processor-implemented method (600) of claim 1, wherein the PSCE includes a Pure Strategy Egalitarian Equilibrium (PSEE) and a Pure Strategy Utilitarian Equilibrium (PSUE).

3. The processor-implemented method (600) of claim 2, wherein the Pure Strategy Egalitarian Equilibrium (PSEE) is selected to maximize reward of least efficient agent's reward in the one or more groups.

4. The processor-implemented method (600) of claim 2, wherein the Pure Strategy Utilitarian Equilibrium (PSUE) is selected to maximize the sum of all agents rewards, which indeed ensure maximum resource utilization in the one or more groups.

5. A system (100) for a game theory based real-time distributed dynamic task scheduling among a plurality of agents, the system comprising:

   an input/output interface (104) for receiving a plurality of predefined attributes of each task, and a plurality of predefined attributes of each agent;
   one or more hardware processors (108);
   at least one memory (110) in communication with the one or more hardware processors (108), wherein the one or more hardware processors (108) are configured to execute programmed instructions stored in the memory (110), to:

      self-allocate the received set of tasks among the plurality of agents satisfying predefined constraints, dynamically in a distributed fashion, following an ordered sequence of agent indexes, wherein the predefined constraints include capability of each of the plurality of agents to complete the self-allocated task within a predefined execution time, and minimization of penalty of each strategy, wherein based on the ordered sequence, at least one preferred agent, self-allocates the set of tasks among the plurality of agents based on a minimum equidistant norm between one or more attributes of each task and one or more attributes of each agent;
      determine one or more strategies based on the self-allocation of the set of tasks among the plurality of agents, wherein each strategy is a union of self-allocated set of tasks of each agent;
      compute a reward for each strategy of each of the plurality of agents with an assumption of a multi-agent markov decision process (MMDP);
      determine a consensus among the plurality of agents based on a pure strategy correlated equilibrium (PSCE) employing rewards of the plurality of agents;

         schedule the set of self-allocated tasks among the plurality of agents in the real-time based on the determined consensus, wherein the real-time scheduling of the set of tasks among the plurality of agents in a distributed fashion;
         create one or more groups from the plurality of agents based on a predefined mutual equidistant principle;
         determine one or more strategies within each of the one or more groups based on task allocation among the agents of each group;
         compute a reward function of each of the one or more determined strategies of each of the plurality of agents with MMDP assumption;
         determine a consensus among the agents of each group based on the PSCE, wherein a group lead is identified randomly;
         determine a group priority queue based on the determined consensus among the agents of each group; and
         schedule the set of tasks among the plurality of agents based on the identified group lead and tasks are executed following the determined priority queue.

6. A non-transitory computer readable medium storing one or more instructions which when executed by one or more processors on a system cause the one or more processors to perform the method comprising:

   receiving (602), via one or more hardware processors, a plurality of predefined attributes of each of the set of tasks, and a plurality of predefined attributes of each of the plurality of agents;
   self-allocating (604), via one or more hardware processors, the received set of tasks among the plurality of agents satisfying predefined constraints, dynamically in a distributed fashion, following an ordered sequence of agent indexes, wherein the predefined constraints include capability of each of the plurality of agents to complete the self-allocated task within a predefined execution time, and minimization of penalty of each strategy, wherein based on the ordered sequence, at least one preferred agent, self-allocates the set of tasks among the plurality of agents based on a minimum equidistant norm between one or more attributes of each task and one or more attributes of each agent;

determining (606), via one or more hardware processors, one or more strategies based on the self-allocation of the set of tasks among the plurality of agents, wherein each strategy is a union of self-allocated set of tasks of each agent;

computing (608), via one or more hardware processors, a reward for each strategy of each of the plurality of agents with an assumption of a multi-agent markov decision process (MMDP);

determining (610), via one or more hardware processors, a consensus among the plurality of agents based on a pure strategy correlated equilibrium (PSCE) employing rewards of the plurality of agents;

scheduling (612), via one or more hardware processors, the set of self-allocated tasks among the plurality of agents in the real-time based on the determined consensus, wherein the real-time scheduling of the set of tasks among the plurality of agents is performed in a distributed fashion;

creating, via one or more hardware processors, one or more groups from the plurality of agents based on a predefined mutual equidistant principle;

determining, via the one or more hardware processors, one or more strategies within each of the one or more groups based on task allocation among the agents of each group;

computing, via the one or more hardware processors, a reward function of each of the one or more determined strategies of each of the plurality of agents with **MMDP** assumption;

determining, via the one or more hardware processors, a consensus among the agents of each group based on the PSCE, wherein a group lead is identified randomly;

determining, via the one or more hardware processors, a group priority queue based on the determined consensus among the agents of each group;

scheduling, via the one or more hardware processors, the set of tasks among the plurality of agents based on the identified group lead and tasks are executed following the determined priority queue;

## Patentansprüche

1. Prozessorimplementiertes Verfahren (600) für eine spieltheoriebasierte verteilte dynamische Echtzeit-Aufgabenplanung unter einer Mehrzahl von Agenten, umfassend:

Empfangen (602), über einen oder mehrere Hardwareprozessoren, einer Mehrzahl von vordefinierten Attributen jedes des Satzes von Aufgaben und einer Mehrzahl von vordefinierten Attributen jedes der Mehrzahl von Agenten;

Selbstzuordnen (604), über einen oder mehrere Hardwareprozessoren, des empfangenen Satzes von Aufgaben unter der Mehrzahl von Agenten, die vordefinierte Einschränkungen erfüllen, dynamisch in einer verteilten Weise, einer geordneten Sequenz von Agentenindizes folgend, wobei die vordefinierten Einschränkungen die Fähigkeit jedes der Mehrzahl von Agenten, die selbstzugeordnete Aufgabe innerhalb einer vordefinierten Ausführungszeit abzuschließen, und die Minimierung der Strafe jeder Strategie beinhalten, wobei basierend auf der geordneten Sequenz mindestens ein bevorzugter Agent den Satz von Aufgaben unter der Mehrzahl von Agenten basierend auf einer minimalen äquidistanten Norm zwischen einem oder mehreren Attributen jeder Aufgabe und einem oder mehreren Attributen jedes Agenten selbstzuordnet;

Bestimmen (606), über einen oder mehrere Hardwareprozessoren, einer oder mehrerer Strategien basierend auf der Selbstzuordnung des Satzes von Aufgaben unter der Mehrzahl von Agenten, wobei jede Strategie eine Vereinigung von selbstzugeordneten Sätzen von Aufgaben jedes Agenten ist;

Berechnen (608), über einen oder mehrere Hardwareprozessoren, einer Belohnung für jede Strategie jedes der Mehrzahl von Agenten mit einer Annahme eines Multi-Agent-Markov-Entscheidungsprozesses (MMDP);

Bestimmen (610), über einen oder mehrere Hardwareprozessoren, eines Konsens unter der Mehrzahl von Agenten basierend auf einem reinen strategiekorrelierten Gleichgewicht (PSCE), das Belohnungen der Mehrzahl von Agenten einsetzt;

Planen (612), über einen oder mehrere Hardwareprozessoren, des Satzes von selbstzugeordneten Aufgaben unter der Mehrzahl von Agenten in der Echtzeit basierend auf dem bestimmten Konsens, wobei die Echtzeitplanung des Satzes von Aufgaben unter der Mehrzahl von Agenten in einer verteilten Weise durchgeführt wird;

Erzeugen, über einen oder mehrere Hardwareprozessoren, einer oder mehrerer Gruppen aus der Mehrzahl von Agenten basierend auf einem vordefinierten gegenseitigen äquidistanten Prinzip;

Bestimmen, über den einen oder die mehreren Hardwareprozessoren, einer oder mehrerer Strategien innerhalb jeder der einen oder mehreren Gruppen basierend auf Aufgabenzuordnung unter den Agenten jeder Gruppe;

Berechnen, über den einen oder die mehreren Hardwareprozessoren, einer Belohnungsfunktion jeder der einen oder mehreren bestimmten Strategien jedes der Mehrzahl von Agenten mit MMDP- Annahme;

Bestimmen, über den einen oder die mehreren Hardwareprozessoren, eines Konsens unter den Agenten jeder Gruppe basierend auf dem PSCE, wobei eine Gruppenleitung zufällig identifiziert wird;

Bestimmen, über den einen oder die mehreren Hardwareprozessoren, einer Gruppenprioritätswarteschlange basierend auf dem bestimmten Konsens unter den Agenten jeder Gruppe; und

Planen, über den einen oder die mehreren Hardwareprozessoren, des Satzes von Aufgaben unter der Mehrzahl von Agenten basierend auf der identifizierten Gruppenleitung und Aufgaben werden nach der bestimmten Prioritätswarteschlange ausgeführt.

2. Prozessorimplementiertes Verfahren (600) nach Anspruch 1, wobei das PSCE ein reines Strategieegalitäres Gleichgewicht (PSEE) und ein reines Strategieutilitaristisches Gleichgewicht (PSUE) beinhaltet.

3. Prozessorimplementiertes Verfahren (600) nach Anspruch 2, wobei das reine Strategieegalitäre Gleichgewicht (PSEE) ausgewählt wird, um die Belohnung der Belohnung des am wenigsten effizienten Agenten in der einen oder den mehreren Gruppen zu maximieren.

4. Prozessorimplementiertes Verfahren (600) nach Anspruch 2, wobei das reine Strategieutilitaristische Gleichgewicht (PSUE) ausgewählt wird, um die Summe aller Agentenbelohnungen zu maximieren, die tatsächlich die maximale Ressourcennutzung in der einen oder den mehreren Gruppen sicherstellen.

5. System (100) für eine spieltheoriebasierte verteilte dynamische Echtzeit-Aufgabenplanung unter einer Mehrzahl von Agenten, wobei das System umfasst:

eine Eingabe-/Ausgabeschnittstelle (104) zum Empfangen einer Mehrzahl von vordefinierten Attributen jeder Aufgabe und einer Mehrzahl von vordefinierten Attributen jedes Agenten;

einen oder mehrere Hardwareprozessoren (108);

mindestens einen Speicher (110) in Kommunikation mit dem einen oder den mehreren Hardwareprozessoren (108), wobei der eine oder die mehreren Hardwareprozessoren (108) konfiguriert sind, um programmierte Anweisungen auszuführen, die in dem Speicher (110) gespeichert sind, um:

den empfangenen Satz von Aufgaben unter der Mehrzahl von Agenten, die vordefinierte Einschränkungen erfüllen, dynamisch in einer verteilten Weise, einer geordneten Sequenz von Agentenindizes folgend, selbstzuzuordnen, wobei die vordefinierten Einschränkungen die Fähigkeit jedes der Mehrzahl von Agenten, die selbstzugeordnete Aufgabe innerhalb einer vordefinierten Ausführungszeit abzuschließen, und die Minimierung der Strafe jeder Strategie beinhalten, wobei basierend auf der geordneten Sequenz mindestens ein bevorzugter Agent den Satz von Aufgaben unter der Mehrzahl von Agenten basierend auf einer minimalen äquidistanten Norm zwischen einem oder mehreren Attributen jeder Aufgabe und einem oder mehreren Attributen jedes Agenten selbstzuordnet;

eine oder mehrere Strategien basierend auf der Selbstzuordnung des Satzes von Aufgaben unter der Mehrzahl von Agenten zu bestimmen, wobei jede Strategie eine Vereinigung von selbstzugeordneten Sätzen von Aufgaben jedes Agenten ist;

eine Belohnung für jede Strategie jedes der Mehrzahl von Agenten mit einer Annahme eines Multi-Agent-Markov-Entscheidungsprozesses (MMDP) zu berechnen;

einen Konsens unter der Mehrzahl von Agenten basierend auf einem reinen strategiekorrelierten Gleichgewicht (PSCE), das Belohnungen der Mehrzahl von Agenten einsetzt, zu bestimmen;

die Menge von selbstzugeordneten Aufgaben unter der Mehrzahl von Agenten in der Echtzeit basierend auf dem bestimmten Konsens zu planen, wobei die Echtzeitplanung des Satzes von Aufgaben unter der Mehrzahl von Agenten in einer verteilten Weise erfolgt;

eine oder mehrere Gruppen aus der Mehrzahl von Agenten basierend auf einem vordefinierten gegenseitigen äquidistanten Prinzip zu erzeugen;

eine oder mehrere Strategien innerhalb jeder der einen oder mehreren Gruppen basierend auf Aufgabenzuordnung unter den Agenten jeder Gruppe zu bestimmen;

eine Belohnungsfunktion jeder der einen oder mehreren bestimmten Strategien jedes der Mehrzahl von Agenten mit MMDP-Annahme zu berechnen;

einen Konsens unter den Agenten jeder Gruppe basierend auf dem PSCE zu bestimmen, wobei eine Gruppenleitung zufällig identifiziert wird;

eine Gruppenprioritätswarteschlange basierend auf dem bestimmten Konsens unter den Agenten jeder Gruppe zu bestimmen; und

die Menge von Aufgaben unter der Mehrzahl von Agenten basierend auf der identifizierten Gruppenleitung und Aufgaben nach der bestimmten Prioritätswarteschlange auszuführen.

**6.** Nichtflüchtiges computerlesbares Medium, das eine oder mehrere Anweisungen speichert, die, wenn sie von einem oder mehreren Prozessoren auf einem System ausgeführt werden, den einen oder die mehreren Prozessoren veranlassen, das Verfahren durchzuführen, umfassend:

Empfangen (602), über einen oder mehrere Hardwareprozessoren, einer Mehrzahl von vordefinierten Attributen jedes des Satzes von Aufgaben und einer Mehrzahl von vordefinierten Attributen jedes der Mehrzahl von Agenten;

Selbstzuordnen (604), über einen oder mehrere Hardwareprozessoren, des empfangenen Satzes von Aufgaben unter der Mehrzahl von Agenten, die vordefinierte Einschränkungen erfüllen, dynamisch in einer verteilten Weise, einer geordneten Sequenz von Agentenindizes folgend, wobei die vordefinierten Einschränkungen die Fähigkeit jedes der Mehrzahl von Agenten, die selbstzugeordnete Aufgabe innerhalb einer vordefinierten Ausführungszeit abzuschließen, und die Minimierung der Strafe jeder Strategie beinhalten, wobei basierend auf der geordneten Sequenz mindestens ein bevorzugter Agent den Satz von Aufgaben unter der Mehrzahl von Agenten basierend auf einer minimalen äquidistanten Norm zwischen einem oder mehreren Attributen jeder Aufgabe und einem oder mehreren Attributen jedes Agenten selbstzuordnet;

Bestimmen (606), über einen oder mehrere Hardwareprozessoren, einer oder mehrerer Strategien basierend auf der Selbstzuordnung des Satzes von Aufgaben unter der Mehrzahl von Agenten, wobei jede Strategie eine Vereinigung von selbstzugeordneten Sätzen von Aufgaben jedes Agenten ist;

Berechnen (608), über einen oder mehrere Hardwareprozessoren, einer Belohnung für jede Strategie jedes der Mehrzahl von Agenten mit einer Annahme eines Multi-Agent-Markov-Entscheidungsprozesses (MMDP);

Bestimmen (610), über einen oder mehrere Hardwareprozessoren, eines Konsens unter der Mehrzahl von Agenten basierend auf einem reinen strategiekorrelierten Gleichgewicht (PSCE), das Belohnungen der Mehrzahl von Agenten einsetzt;

Planen (612), über einen oder mehrere Hardwareprozessoren, des Satzes von selbstzugeordneten Aufgaben unter der Mehrzahl von Agenten in der Echtzeit basierend auf dem bestimmten Konsens, wobei die Echtzeitplanung des Satzes von Aufgaben unter der Mehrzahl von Agenten in einer verteilten Weise durchgeführt wird;

Erzeugen, über einen oder mehrere Hardwareprozessoren, einer oder mehrerer Gruppen aus der Mehrzahl von Agenten basierend auf einem vordefinierten gegenseitigen äquidistanten Prinzip;

Bestimmen, über den einen oder die mehreren Hardwareprozessoren, einer oder mehrerer Strategien innerhalb jeder der einen oder mehreren Gruppen basierend auf Aufgabenzuordnung unter den Agenten jeder Gruppe;

Berechnen, über den einen oder die mehreren Hardwareprozessoren, einer Belohnungsfunktion jeder der einen oder mehreren bestimmten Strategien jedes der Mehrzahl von Agenten mit MMDP-Annahme;

Bestimmen, über den einen oder die mehreren Hardwareprozessoren, eines Konsens unter den Agenten jeder Gruppe basierend auf dem PSCE, wobei eine Gruppenleitung zufällig identifiziert wird;

Bestimmen, über den einen oder die mehreren Hardwareprozessoren, einer Gruppenprioritätswarteschlange basierend auf dem bestimmten Konsens unter den Agenten jeder Gruppe;

Planen, über den einen oder die mehreren Hardwareprozessoren, des Satzes von Aufgaben unter der Mehrzahl von Agenten basierend auf der identifizierten Gruppenleitung und Aufgaben werden nach der bestimmten Prioritätswarteschlange ausgeführt;

## Revendications

**1.** Procédé mis en œuvre par processeur (600) pour une planification de tâches dynamique distribuée en temps réel basée sur la théorie du jeu parmi une pluralité d'agents comprenant

la réception (602), via un ou plusieurs processeurs matériels, d'une pluralité d'attributs prédéfinis de chacune de l'ensemble de tâches, et d'une pluralité d'attributs prédéfinis de chacun de la pluralité d'agents ;

l'auto-attribution (604), via un ou plusieurs processeurs matériels, de l'ensemble de tâches reçu parmi la pluralité d'agents satisfaisant des contraintes prédéfinies, de manière dynamique d'une manière distribuée, suivant une séquence ordonnée d'index d'agent, dans lequel les contraintes prédéfinies incluent la capacité de chacun de la pluralité d'agents à terminer la tâche auto-attribuée dans un temps d'exécution prédéfini, et la minimisation de pénalité de chaque stratégie, dans lequel sur la base de la séquence ordonnée, au moins un agent préféré, auto-attribue l'ensemble de tâches parmi la pluralité d'agents sur la base d'une norme équidistante minimale entre un ou plusieurs attributs de chaque tâche et un ou plusieurs attributs de chaque agent ;

la détermination (606), via un ou plusieurs processeurs matériels, d'une ou plusieurs stratégies sur la base de l'auto-attribution de l'ensemble de tâches parmi la pluralité d'agents, dans lequel chaque stratégie est une union d'ensemble de tâches auto-attribuées de chaque agent ;

le calcul (608), via un ou plusieurs processeurs matériels, d'une récompense pour chaque stratégie de chacun de la pluralité d'agents avec une supposition d'un processus de décision de Markov multi-agent (MMDP) ;

la détermination (610), via un ou plusieurs processeurs matériels, d'un consensus parmi la pluralité d'agents sur la base d'un équilibre corrélé de stratégie pure (PSCE) employant des récompenses de la pluralité d'agents ;

la planification (612), via un ou plusieurs processeurs matériels, de l'ensemble de tâches auto-attribuées parmi la pluralité d'agents en temps réel sur la base du consensus déterminé, dans lequel la planification en temps réel de l'ensemble de tâches parmi la pluralité d'agents est effectuée d'une manière distribuée ;

la création, via un ou plusieurs processeurs matériels, d'un ou plusieurs groupes à partir de la pluralité d'agents sur la base d'un principe équidistant mutuel prédéfini;

la détermination, via les un ou plusieurs processeurs matériels, d'une ou plusieurs stratégies au sein de chacun des un ou plusieurs groupes sur la base d'une attribution de tâche parmi les agents de chaque groupe ;

le calcul, via les un ou plusieurs processeurs matériels, d'une fonction de récompense de chacune des une ou plusieurs stratégies déterminées de chacun de la pluralité d'agents avec une supposition MMDP ;

la détermination, via les un ou plusieurs processeurs matériels, d'un consensus parmi les agents de chaque groupe sur la base du PSCE, dans lequel un chef de groupe est identifié de manière aléatoire ;

la détermination, via les un ou plusieurs processeurs matériels, d'une file d'attente de priorité de groupe sur la base du consensus déterminé parmi les agents de chaque groupe ; et

la planification, via les un ou plusieurs processeurs matériels, de l'ensemble de tâches parmi la pluralité d'agents sur la base du chef de groupe identifié et des tâches sont exécutées à la suite de la file d'attente de priorité déterminée.

2. Procédé mis en œuvre par processeur (600) selon la revendication 1, dans lequel le PSCE inclut un équilibre égalitaire de stratégie pure (PSEE) et un équilibre utilitaire de stratégie pure (PSUE).

3. Procédé mis en œuvre par processeur (600) selon la revendication 2, dans lequel l'équilibre égalitaire de stratégie pure (PSEE) est sélectionné pour maximiser la récompense de la récompense de l'agent le moins efficace dans les un ou plusieurs groupes.

4. Procédé mis en œuvre par processeur (600) selon la revendication 2, dans lequel l'équilibre utilitaire de stratégie pure (PSUE) est sélectionné pour maximiser la somme de toutes les récompenses d'agents, qui assurent effectivement une utilisation de ressource maximale dans les un ou plusieurs groupes.

5. Système (100) pour une planification de tâches dynamique distribuée en temps réel basée sur la théorie du jeu parmi une pluralité d'agents, le système comprenant :

une interface d'entrée/sortie (104) pour recevoir une pluralité d'attributs prédéfinis de chaque tâche, et une pluralité d'attributs prédéfinis de chaque agent ; un ou plusieurs processeurs matériels (108) ;

au moins une mémoire (110) en communication avec les un ou plusieurs processeurs matériels (108), dans lequel les un ou plusieurs processeurs matériels (108) sont configurés pour exécuter des instructions programmées stockées dans la mémoire (110), pour :

auto-attribuer l'ensemble de tâches reçu parmi la pluralité d'agents satisfaisant des contraintes prédéfinies, de manière dynamique d'une manière distribuée, suivant une séquence ordonnée d'index d'agent, dans lequel les contraintes prédéfinies incluent la capacité de chacun de la pluralité d'agents à terminer la tâche auto-attribuée dans un temps d'exécution prédéfini, et la minimisation de pénalité de chaque stratégie, dans lequel sur la base de la séquence ordonnée, au moins un agent préféré, auto-attribue l'ensemble de tâches parmi la pluralité d'agents sur la base d'une norme équidistante minimale entre un ou plusieurs attributs de chaque tâche et un ou plusieurs attributs de chaque agent ;

déterminer une ou plusieurs stratégies sur la base de l'auto-attribution de l'ensemble de tâches parmi la pluralité d'agents, dans lequel chaque stratégie est une union d'ensemble de tâches auto-attribuées de chaque agent ;

calculer une récompense pour chaque stratégie de chacun de la pluralité d'agents avec une supposition d'un processus de décision de Markov multi-agent (MMDP) ;

déterminer un consensus parmi la pluralité d'agents sur la base d'un équilibre corrélé de stratégie pure (PSCE) employant des récompenses de la pluralité d'agents;

planifier l'ensemble de tâches auto-attribuées parmi la pluralité d'agents en temps réel sur la base du consensus déterminé, dans lequel la planification en temps réel de l'ensemble de tâches parmi la pluralité d'agents d'une manière distribuée ;

créer un ou plusieurs groupes à partir de la pluralité d'agents sur la base d'un principe équidistant mutuel prédéfini ;

déterminer une ou plusieurs stratégies au sein de chacun des un ou plusieurs groupes sur la base d'une attribution de tâche parmi les agents de chaque groupe ;

calculer une fonction de récompense de chacune des une ou plusieurs stratégies déterminées de chacun de la pluralité d'agents avec une supposition MMDP ;

déterminer un consensus parmi les agents de chaque groupe sur la base du PSCE, dans lequel un chef de groupe est identifié de manière aléatoire ;

déterminer une file d'attente de priorité de groupe sur la base du consensus déterminé parmi les agents de chaque groupe ; et

planifier l'ensemble de tâches parmi la pluralité d'agents sur la base du chef de groupe identifié et des tâches sont exécutées à la suite de la file d'attente de priorité déterminée.

6. Support lisible par ordinateur non transitoire stockant une ou plusieurs instructions qui, lorsqu'elles sont exécutées par un ou plusieurs processeurs sur un système, amènent les un ou plusieurs processeurs à effectuer le procédé comprenant :

la réception (602), via un ou plusieurs processeurs matériels, d'une pluralité d'attributs prédéfinis de chacune de l'ensemble de tâches, et d'une pluralité d'attributs prédéfinis de chacun de la pluralité d'agents ;

l'auto-attribution (604), via un ou plusieurs processeurs matériels, de l'ensemble de tâches reçu parmi la pluralité d'agents satisfaisant des contraintes prédéfinies, de manière dynamique d'une manière distribuée, suivant une séquence ordonnée d'index d'agent, dans lequel les contraintes prédéfinies incluent la capacité de chacun de la pluralité d'agents à terminer la tâche auto-attribuée dans un temps d'exécution prédéfini, et la minimisation de pénalité de chaque stratégie, dans lequel sur la base de la séquence ordonnée, au moins un agent préféré, auto-attribue l'ensemble de tâches parmi la pluralité d'agents sur la base d'une norme équidistante minimale entre un ou plusieurs attributs de chaque tâche et un ou plusieurs attributs de chaque agent ;

la détermination (606), via un ou plusieurs processeurs matériels, d'une ou plusieurs stratégies sur la base de l'auto-attribution de l'ensemble de tâches parmi la pluralité d'agents, dans lequel chaque stratégie est une union d'ensemble de tâches auto-attribuées de chaque agent ;

le calcul (608), via un ou plusieurs processeurs matériels, d'une récompense pour chaque stratégie de chacun de la pluralité d'agents avec une supposition d'un processus de décision de Markov multi-agent (MMDP) ;

la détermination (610), via un ou plusieurs processeurs matériels, d'un consensus parmi la pluralité d'agents sur la base d'un équilibre corrélé de stratégie pure (PSCE) employant des récompenses de la pluralité d'agents ;

la planification (612), via un ou plusieurs processeurs matériels, de l'ensemble de tâches auto-attribuées parmi la pluralité d'agents en temps réel sur la base du consensus déterminé, dans lequel la planification en temps réel de l'ensemble de tâches parmi la pluralité d'agents est effectuée d'une manière distribuée ;

la création, via un ou plusieurs processeurs matériels, d'un ou plusieurs groupes à partir de la pluralité d'agents sur la base d'un principe équidistant mutuel prédéfini;

la détermination, via les un ou plusieurs processeurs matériels, d'une ou plusieurs stratégies au sein de chacun des un ou plusieurs groupes sur la base d'une attribution de tâche parmi les agents de chaque groupe ;

le calcul, via les un ou plusieurs processeurs matériels, d'une fonction de récompense de chacune des une ou plusieurs stratégies déterminées de chacun de la pluralité d'agents avec une supposition MMDP ;

la détermination, via les un ou plusieurs processeurs matériels, d'un consensus parmi les agents de chaque groupe sur la base du PSCE, dans lequel un chef de groupe est identifié de manière aléatoire ;

la détermination, via les un ou plusieurs processeurs matériels, d'une file d'attente de priorité de groupe sur la base du consensus déterminé parmi les agents de chaque groupe ;

la planification, via les un ou plusieurs processeurs matériels, de l'ensemble de tâches parmi la pluralité d'agents sur la base du chef de groupe identifié et des tâches sont exécutées à la suite de la file d'attente de priorité déterminée ;

FIG. 1

EP 4 002 234 B1

System (100)

| Hardware Processor(s) (108) | | I/O Interface(s) (104) |

Memory (110)

Modules (114)

Data Repository (112)

**FIG. 2**

FIG. 3

FIG. 4

EP 4 002 234 B1

FIG. 5(a)

FIG. 5(b)

600

Start

| Receiving a plurality of attributes of tasks and agents | 602 |

| Indexing agents based on permutations among the plurality of agents | 604 |

| Allocating the tasks among the agents considering predefined constraints | 606 |

| Determining strategies based on task allocation among the agents | 608 |

| Computing reward for agents for each strategy based on heuristic reward function | 610 |

| Determining a consensus among the agents based PSCE, determined strategies and computed rewards | 612 |

| Scheduling task among the agents based on the determined consensus among the agents | 614 |

Stop

FIG. 6

**EP 4 002 234 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IN 202021049766
- US 2020273346 A1